# EUROPEAN PATENT SPECIFICATION

(11) **EP 3 920 618 B1**
(45) Date of publication and mention of the grant of the patent: **24.08.2022**
(21) Application number: 19917439.2
(22) Date of filing: 28.02.2019
(51) Int. Cl.: H04B 3/54, H04W 74/02

(54) **TIME ALLOCATION METHOD, MANAGEMENT DEVICE AND SYSTEM**
VERFAHREN ZUR ZEITZUTEILUNG, VERWALTUNGSVORRICHTUNG UND SYSTEM
PROCÉDÉ D'ATTRIBUTION DE TEMPS, DISPOSITIF DE GESTION ET SYSTÈME

(43) Date of publication of application: 08.12.2021
(73) Proprietor: Huawei Technologies Co., Ltd., Longgang District Shenzhen, Guangdong 518129 (CN)
(72) Inventor: CAI, Wenchao, Shenzhen, Guangdong 518129 (CN); ZENG, Yan, Shenzhen, Guangdong 518129 (CN)
(74) Representative: Isarpatent
(86) International application number: PCT/CN2019/076489
(87) International publication number: WO 2020/172855

(56) References cited:
- CN-A- 101 167 395
- CN-A- 106 900 063
- CN-A- 108 141 882
- US-A1- 2003 137 993
- US-A1- 2006 215 583
- US-A1- 2009 067 389
- US-A1- 2015 201 336

## Description

### TECHNICAL FIELD

This disclosure relates to the communications field, and the invention in particular relates to a time allocation method, a management device and a system.

### BACKGROUND

A low-voltage power distribution network includes a power distribution substation, a high-voltage power distribution line, a power distribution transformer, a low-voltage power distribution line, and a corresponding control and protection device. The low-voltage power distribution network requires zone selective protection with low latency. At present, a requirement for power supply quality of the low-voltage power distribution network is increasingly high, and uninterruptible power supply is required. Even if a fault occurs, power outage duration is required to be as short as possible, and a power outage scope is required to be as small as possible. To minimize the power outage scope, the control and protection device is required to identify a fault type promptly when the fault occurs in a power system and quickly cut a faulty part from the system to prevent the fault from escalating.

Currently, for a low-voltage power distribution network based on power line communication (power line communication, PLC), when a power module or a power line in which a PLC tail-end node device (station, STA) in the low-voltage power distribution network is located is faulty, the STA may monitor a channel in a contention manner within latency requirement duration. When detecting that the channel is busy, the STA randomly backs off a period of random duration. Then, the STA monitors the channel again. When detecting that the channel is idle, the STA sends a service packet, and the service packet is used to notify another STA to perform disconnection for protection or not to perform an action.

In the foregoing solution, the latency requirement duration is set to contention duration, and each STA may monitor the channel within the contention duration. When the channel is busy, the STA needs to back off and wait. The STA can send the service packet only when the STA detects that the channel is idle. Therefore, in the foregoing solution, the latency requirement duration is set to the contention duration, and each STA may send the service packet within the contention duration by contending for the channel. Consequently, a latency in sending the service packet by the STA is uncontrollable, and a low-latency requirement of a zone selective protection function in a low-voltage power distribution network scenario cannot be met. A time allocation method and apparatus is for example disclosed in US 2009/067 389).

### SUMMARY

The object of the present invention is to provide a time allocation method, a management device and a system to ensure that a latency requirement can be better satisfied, thereby better meeting a low-latency requirement of a zone selective protection function in a low-voltage power distribution network scenario. This object is solved by the independent claims and the dependent claims defines further advantageous embodiments and improvements.

As defined by claim 1, the invention provides a time allocation method, comprising: allocating, by a management device, a first sharing duration to a first group, and allocating a second sharing duration to a second group, wherein the first group comprises at least one node device managed by the management device, and the second group comprises at least one node device managed by the management device, the first sharing duration is used by the at least one node device comprised in the first group to send a service packet, and the second sharing duration is used by the at least one node device comprised in the second group to send a service packet; allocating, by the management device, a contention duration to a node device managed by the management device, wherein the contention duration is used by the node device managed by the management device to send a service packet by contending for a channel; and sending, by the management device, at least one first notification message, wherein the at least one first notification message is used to notify that the at least one node device comprised in the first group corresponds to the first sharing duration and the at least one node device comprised in the second group corresponds to the second sharing duration, and is used to determine the contention duration by the at least one node device comprised in the first group and the at least one node device comprised in the second group, wherein before the allocating, by the management device, the first sharing duration to the first group, and allocating the second sharing duration to the second group, the method further comprises: determining, by the management device, a quantity of groups, wherein the quantity of groups is a quantity of groups obtained after the management device groups the node device managed by the management device; and determining, by the management device, a node device corresponding to each group in the obtained groups; and the determining, by the management device, a quantity of groups comprises: determining, by the management device, the quantity of groups based on preset required latency duration and transmission duration of the service packet.

Preferred embodiments are defined by claims 2 to 10.

As defined by claim 11, the invention provides a management device, comprising: a processing module, configured to allocate a first sharing duration to a first group, and allocate a second sharing duration to a second group, wherein the first group comprises at least one node device managed by the management device, and the second group comprises at least one node device managed by the management device, the first sharing duration is used by the at least one node device comprised in the first group to send a service packet, and the second sharing duration is used by the at least one node device comprised in the second group to send a service packet, wherein the processing module is configured to allocate a contention duration to a node device managed by the management device, wherein the contention duration is used by the node device managed by the management device to send a service packet by contending for a channel; and a transceiver module, configured to send at least one first notification message, wherein the at least one first notification message is used to notify that the at least one node device comprised in the first group corresponds to the first sharing duration and the at least one node device comprised in the second group corresponds to the second sharing duration, and is used to determine the contention duration by the at least one node device comprised in the first group and the at least one node device comprised in the second group; and wherein the processing module is further configured to, before allocating the first sharing duration to the first group, and allocating the second sharing duration to the second group: determine a quantity of groups, wherein the quantity of groups is a quantity of groups obtained after the management device groups the node device managed by the management device; and determine a node device corresponding to each group in the obtained groups, groups; wherein the processing module is specifically configured to: determine the quantity of groups based on a preset required latency duration and transmission duration of the service packet.

As defined by claim 12, the invention provides a system comprising a management device according to claim 11 and a first node, wherein the first node comprises: a transceiver module, configured to receive a first notification message sent by the management device; and a processing module, configured to: determine, based on the first notification message, sharing duration allocated by the management device to the first node device and determine contention duration, wherein the transceiver module is configured to: send a service packet within the sharing duration, and send a service packet within the contention duration by contending for a channel.

In the technical solutions described here, the management device may allocate the first sharing duration to the first group, and allocate the second sharing duration to the second group. The at least one node device included in the first group corresponds to the first sharing duration, and the at least one node device may send the service packet within the first sharing duration. The at least one node device included in the second group corresponds to the second sharing duration, and the at least one node device may send the service packet within the second sharing duration. The management device may allocate the contention duration to the node device managed by the management device, and the contention duration is used by the node device managed by the management device to send the service packet. Then, the management device may send the at least one first notification message, to notify first sharing duration that corresponds to the at least two node devices included in the first group and the contention duration, and notify second sharing duration that corresponds to the at least two node devices included in the second group and the contention duration. Therefore, the at least one node device included in the first group and the at least one node device included in the second group do not preempt the sharing duration of each other. This can reduce or avoid, to some extent, the problem that the conflict occurs during service packet sending because all the node devices simultaneously send the service packets by contending for the channel, thereby ensuring that the latency requirement can be satisfied, and better meeting the low-latency requirement of the zone selective protection function in the low-voltage power distribution network scenario.

### BRIEF DESCRIPTION OF DRAWINGS

FIG. 1 is a schematic diagram of a framework of an application scenario according to an embodiment of this application;
FIG. 2 is a schematic diagram of an embodiment of a time allocation method according to an embodiment of this application;
FIG. 3A is a schematic diagram of a scenario of a time allocation method according to an embodiment of this application;
FIG. 3B is a schematic diagram of another scenario of a time allocation method according to an embodiment of this application;
FIG. 3C is a schematic diagram of another scenario of a time allocation method according to an embodiment of this application;
FIG. 4 is a schematic diagram of another embodiment of a time allocation method according to an embodiment of this application;
FIG. 5A is a schematic diagram of another embodiment of a time allocation method according to an embodiment of this application;
FIG. 5B is a schematic diagram of another framework of a time allocation method according to an embodiment of this application;
FIG. 5C is a schematic diagram of another scenario of a time allocation method according to an embodiment of this application;
FIG. 6 is a schematic structural diagram of a time allocation apparatus according to an embodiment of this application;
FIG. 7 is another schematic structural diagram of a time allocation apparatus according to an embodiment of this application;
FIG. 8 is another schematic structural diagram of a time allocation apparatus according to an embodiment of this application; and
FIG. 9 is another schematic structural diagram of a time allocation apparatus according to an embodiment of this application.

### DESCRIPTION OF EMBODIMENTS

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those listed steps or units, but may include other steps or units not expressly listed or inherent to such a process, method, product, or device.

Embodiments of this application provide a time allocation method and a time allocation apparatus, to ensure that a latency requirement can be better satisfied, thereby better meeting a low-latency requirement of a zone selective protection function in a low-voltage power distribution network scenario.

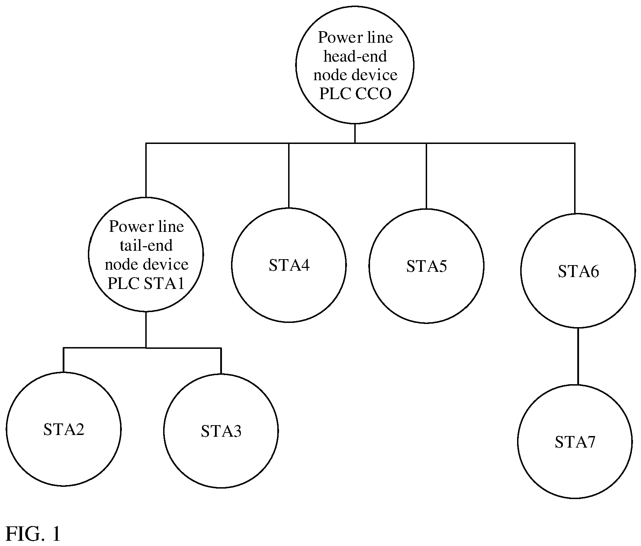

A low-voltage power distribution network includes a power distribution substation, a high-voltage power distribution line, a power distribution transformer, a low-voltage power distribution line, and a corresponding control and protection device. The low-voltage power distribution network requires zone selective protection with low latency. At present, a requirement for power supply quality of the low-voltage power distribution network is increasingly high, and uninterruptible power supply is required. Even if a fault occurs, power outage duration is required to be as short as possible, and a power outage scope is required to be as small as possible. To minimize the power outage scope, the control and protection device is required to identify a fault type promptly when the fault occurs in a power system and quickly cut a faulty part from the system to prevent the fault from escalating. FIG. 1 is a schematic diagram of a system framework of an application scenario according to this application. FIG. 1 is a low-voltage power distribution network based on power line communication (power line communication, PLC). A management device may be understood as a head-end node device in the power line communication (PLC central coordinator, PLC CCO) shown in FIG. 1. A node device may be understood as a PLC STA, that is, a STA1 to a STA7 in FIG. 1. The CCO may control and manage the STA.

When a power module or a power line in which a PLC tail-end node device (station, STA) in the low-voltage power distribution network is located is faulty, the STA may monitor a channel in a contention manner within latency requirement duration. When detecting that the channel is busy, the STA randomly backs off a period of random duration. Then, the STA monitors the channel again. When detecting that the channel is idle, the STA sends a service packet, and the service packet is used to notify another STA to perform disconnection for protection or not to perform an action. In the foregoing solution, the CCO sets the latency requirement duration to contention duration, and each STA may send the service packet within the contention duration by contending for the channel. Consequently, a latency in sending the service packet by the STA is uncontrollable, and a low-latency requirement of a zone selective protection function in a low-voltage power distribution network scenario cannot be met.

It should be noted that, in addition to being applicable to a power line communications system, the time allocation method provided in the embodiments of this application is further applicable to a telephone line communications system and the like. This is not specifically limited in this application. In addition, in a low-latency service scenario, the embodiments of this application are applied to a scenario that is not limited to the scenario in which the fault occurs in the power module or the power line in which the STA is located, and is further applicable to a scenario in which a service packet with a relatively high-latency requirement is sent, for example, logic control, relay protection, and active/standby switching.

In view of this, the embodiments of this application provide a time allocation method, to ensure that a latency requirement can be better satisfied, thereby better meeting a low-latency requirement of a zone selective protection function in a low-voltage power distribution network scenario. In the embodiments of this application, the management device may allocate first sharing duration to a first group, and allocate second sharing duration to a second group. At least one node device included in the first group corresponds to the first sharing duration, and the at least one node device may send a service packet within the first sharing duration. At least one node device included in the second group corresponds to the second sharing duration, and the at least one node device may send a service packet within the second sharing duration. The management device may allocate contention duration to a node device managed by the management device, and the contention duration is used by the node device managed by the management device to send a service packet. Then, the management device may send at least one first notification message, to notify first sharing duration that corresponds to at least two node devices included in the first group and the contention duration, and notify second sharing duration that corresponds to at least two node devices included in the second group and the contention duration. Therefore, the at least one node device included in the first group and the at least one node device included in the second group do not preempt the sharing duration of each other. This can reduce or avoid, to some extent, a problem that a conflict occurs during service packet sending because all node devices simultaneously send service packets by contending for a channel, thereby ensuring that a latency requirement can be satisfied, and better meeting a low-latency requirement of a zone selective protection function in a low-voltage power distribution network scenario.

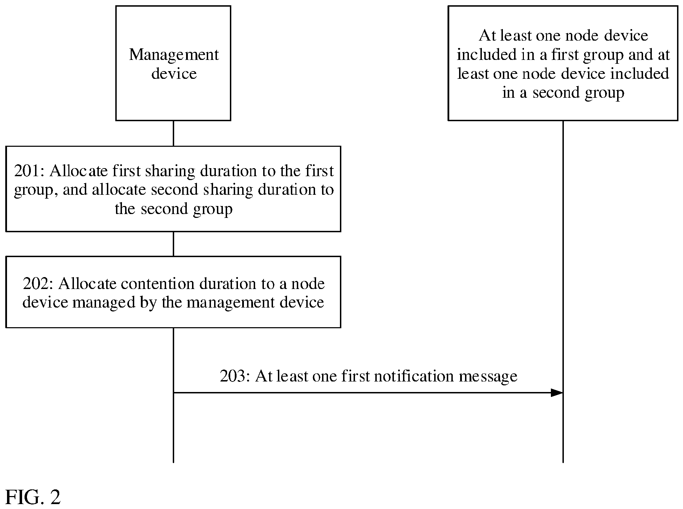

FIG. 2 is a schematic diagram of a time allocation method according to an embodiment of this application. As shown in FIG. 2, the method includes the following steps.

201: A management device allocates first sharing duration to a first group, and allocates second sharing duration to a second group.

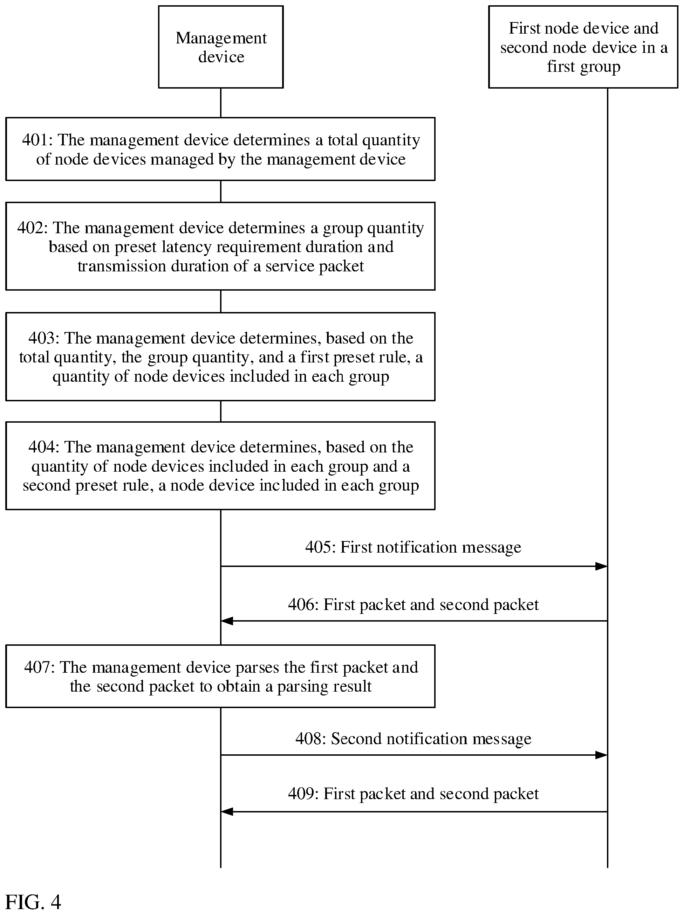

The management device may divide a period of duration into a plurality of pieces of sharing duration and a plurality of pieces of contention duration. The period of duration is less than or equal to preset latency requirement duration in a system. Subsequently, an example in which the period of duration is equal to the preset latency requirement duration is used for description. A quantity of pieces of sharing duration included in the period of duration is consistent with a group quantity g, and the group quantity is a quantity of groups obtained after the management device groups a node device managed by the management device. For a specific dividing process and a process in which the management device determines a node device included in each group, refer to the embodiment shown in FIG. 4. The management device may allocate corresponding sharing duration to each group, and allocate contention duration to all node devices managed by the management device. In this case, the sharing duration is used by a node device included in a corresponding group to send a service packet, and the contention duration is used by the node device managed by the management device to send a service packet by contending for a channel.

It should be noted that the plurality of pieces of sharing duration and the plurality of pieces of contention duration that are included in the preset latency requirement duration may be preset in a system, and the management device does not need to divide the preset latency requirement duration. This is not specifically limited in this application. Then, the contention duration may be carrier sense multiple access with collision avoidance (carrier sense multiple access with collision avoidance, CSMA/CA) duration.

In this embodiment, the sharing duration and the contention duration included in the preset latency requirement duration may be sorted in a plurality of manners within the preset latency requirement duration, and examples are used below for description.

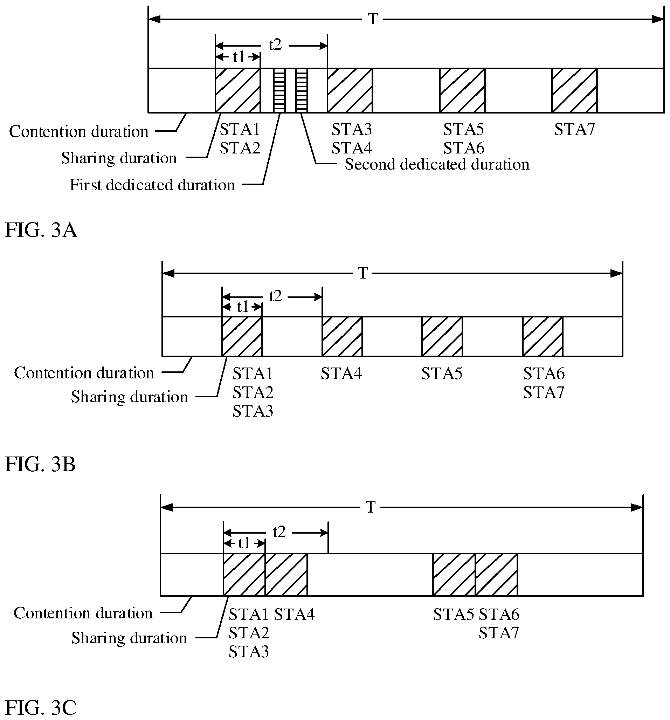

As shown in FIG. 3A, the preset latency requirement duration is T, and the sharing duration and the contention duration are distributed at intervals within the preset latency requirement duration. Further, as shown in FIG. 3C, two pieces of sharing duration and one piece of contention duration are distributed at intervals. Then, within the latency requirement duration T, the sharing duration may also be located at a start end of the latency requirement duration. Therefore, there may be more types of specific manners of sorting the sharing duration and the contention duration within the duration, and the manners are not listed one by one herein. A manner of sorting the sharing duration and the contention duration within the preset latency requirement duration is not limited in this application.

The following describes lengths of the sharing duration and the contention duration. Lengths of the sharing duration within the preset latency requirement duration may be the same or may be different. This is not specifically limited in this application. Likewise, lengths of the contention duration within the preset latency requirement duration may be the same or may be different. This is not specifically limited in this application. The following uses an example in which lengths of all pieces of sharing duration are the same and lengths of all pieces of contention duration are also the same for description. As shown in FIG. 3A, a length of each piece of sharing duration is t1, a length of each piece of contention duration is t2 - t1, T is the preset latency requirement duration, g is the group quantity, t1 is less than or equal to transmission duration of the service packet, and t1 may be less than the transmission duration of the service packet. When a service packet is transmitted within the sharing duration t1, the sharing duration t1 may be automatically extended to subsequent contention duration, to complete transmission of the entire service packet. If no service packet is transmitted within the duration t1, t1 is less than the transmission duration of the service packet, so that a waste of resources can be reduced. In a possible implementation, a quantity of pieces of sharing duration is equal to a quantity of pieces of contention duration, and t2 = T/g.

The management device may allocate the first sharing duration to the first group, and allocate the second sharing duration to the second group. For example, as shown in FIG. 3B, node devices included in the first group are a STA1 and a STA2, and node devices included in the second group are a STA3 and a STA4. The management device may allocate the first sharing duration in the preset latency requirement duration to the STA1 and the STA2, and allocate the second sharing duration in the preset latency requirement duration to the STA3 and the STA4.

202: The management device allocates contention duration to a node device managed by the management device.

The management device may allocate the contention duration to the node device managed by the management device. The contention duration is used by the node device managed by the management device to send a service packet by contending for a channel. Specifically, as shown in FIG. 3B, the preset latency requirement duration T includes five pieces of contention duration. The management device may allocate the five pieces of contention duration to a STA1 to a STA7, so that the STA1 to the STA7 send service packets by contending for a channel.

203: The management device sends at least one first notification message.

After allocating the first sharing duration to the first group, and allocating the second sharing duration to the second group, the management device may send the at least one first notification message, to notify that at least one node device included in the first group corresponds to the first sharing duration and at least one node device included in the second group corresponds to the second sharing duration, and to notify the at least one node device included in the first group and the at least one node device included in the second group to determine the contention duration.

When sending a notification message to notify a node device in a group, the management device may broadcast the notification message in a system, and then a node device in each group determine, by using the notification message, sharing duration corresponding to the node device and contention duration in the preset latency requirement duration. Alternatively, the management device multicasts a corresponding notification message to a corresponding group. For example, the management device may multicast a notification message 1 to the at least one node device included in the first group, and the notification message 1 is used to notify that the at least one node device included in the first group corresponds to the first sharing duration and the contention duration in the preset latency requirement duration. Then, the management device multicasts a notification message 2 to the at least one node device included in the second group, and the notification message 2 is used to notify that the at least one node device included in the second group corresponds to the second sharing duration and the contention duration in the preset latency requirement duration. Specifically, a notification manner of the management device is not limited in this application.

In the embodiments of this application, the management device may allocate the first sharing duration to the first group, and allocate the second sharing duration to the second group. The at least one node device included in the first group corresponds to the first sharing duration, and the at least one node device may send the service packet within the first sharing duration. The at least one node device included in the second group corresponds to the second sharing duration, and the at least one node device may send the service packet within the second sharing duration. The management device may allocate the contention duration to the node device managed by the management device, and the contention duration is used by the node device managed by the management device to send the service packet. Then, the management device may send the at least one first notification message, to notify first sharing duration that corresponds to at least two node devices included in the first group and the contention duration, and notify second sharing duration that corresponds to at least two node devices included in the second group and the contention duration. Therefore, the at least one node device included in the first group and the at least one node device included in the second group do not preempt the sharing duration of each other. This can reduce or avoid, to some extent, a problem that a conflict occurs during service packet sending because all node devices simultaneously send service packets by contending for a channel, thereby ensuring that a latency requirement can be satisfied, and better meeting a low-latency requirement of a zone selective protection function in a low-voltage power distribution network scenario.

In the embodiments of this application, after the management device allocates the first sharing duration to the first group, the at least one node device included in the first group may send the service packet within the first sharing duration. However, if the at least two node devices included in the first group are, for example, a first node device and a second node device, the first node device and the second node device send service packets within the first sharing duration by contending for a channel. However, if the service packet cannot be successfully sent because a conflict occurs, that is, the first node device and the second node device simultaneously obtain the channel through contention and simultaneously send the packets, the management device allocates first dedicated duration to the first node device, and allocates second dedicated duration to the second node device. Dedicated duration is less than or equal to the transmission duration of the service packet. The dedicated duration may be less than duration of the service packet. If a service packet is transmitted within the dedicated duration, the dedicated duration may be automatically extended to subsequent duration, to complete transmission of the entire service packet. If no service packet is transmitted within the dedicated duration, the dedicated duration is less than the transmission duration of the service packet, thereby reducing a waste of resources. In a subsequent embodiment, only an example in which the management device sends the notification message in a unicast manner is used for description. The following provides a detailed description by using FIG. 4. Referring to FIG. 4, an embodiment of a time allocation method according to an embodiment of this application includes the following steps.

401: A management device determines a total quantity of node devices managed by the management device.

The management device may determine a total quantity n of node devices managed by the management device. As shown in FIG. 1, a quantity of STA nodes managed by the CCO is seven.

402: The management device determines a group quantity based on preset latency requirement duration and transmission duration of a service packet.

In a system, if the preset latency requirement duration is T, and the transmission duration of the service packet is t0, the management device may divide the node devices managed by the management device into g groups, that is, the group quantity is g, where g is less than or equal to T/t0. Herein, because the latency requirement duration is T, and the transmission duration of the service packet is t0, when grouping the node devices, the management device divides the node devices into a maximum of T/t0 groups.

403: The management device determines, based on the total quantity, the group quantity, and a first preset rule, a quantity of node devices included in each group.

The management device may determine, based on the total quantity of node devices managed by the management device, the group quantity, and the first preset rule, the quantity of node devices included in each group. The first preset rule is used by the management device to determine the quantity of node devices included in each group. The first preset rule may be that the management device sets the quantity of node devices included in each group to K, where K is greater than or equal to K1, and is less than or equal to K2. K1 = n/(g - m), K2 = n/(g + m), and m is a preset floating range value. Each group includes at least one node device managed by the management device. For example, as shown in FIG. 1, if the group quantity is four, the CCO may determine that a quantity of STAs included in each of three of the groups is two, and a quantity of STAs included in the other group is one.

404: The management device determines, based on the quantity of node devices included in each group and a second preset rule, a node device included in each group.

The management device may determine, based on the quantity of node devices included in each group and the second preset rule, the node device included in each group. The second preset rule is used by the management device to determine the node device included in each group. There may be a plurality of types of second preset rules, which are described below by using examples:

Preset rule a: The management device randomly allocates n node devices to each group.

For example, as shown in FIG. 1, the management device is a PLC CCO, the node device is a STA, and a quantity of STAs managed by the CCO is seven. If the group quantity is four, the CCO determines that three of the groups each include two STAs, and the other group includes one STA. In this case, the CCO may randomly classify the STA into any group. For example, the first group includes a STA1 and a STA2, the second group includes a STA3 and a STA4, the third group includes a STA5 and a STA6, and the fourth group includes a STA7. In other words, the CCO may randomly allocate the STAs to each group.

Preset rule b: The management device determines, based on a physical topology relationship and a preset quantity relationship that are of the node device, the node device included in each group.

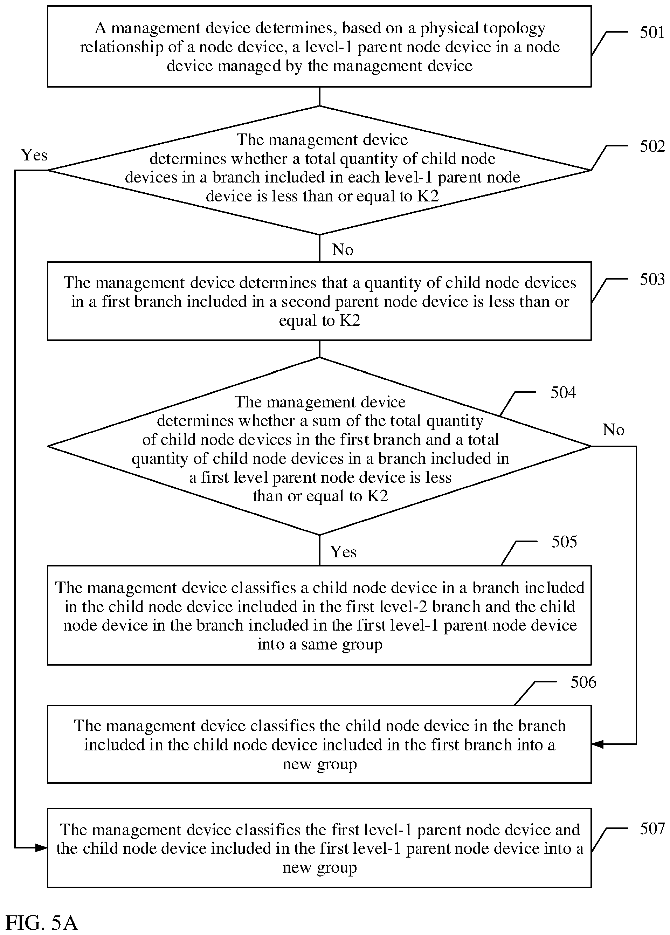

The preset rule b is described below by using FIG. 5A. FIG. 5A shows a specific implementation in which the management device determines, based on the physical topology relationship and the preset quantity relationship that are of the node device, the node device included in each group. The process includes the following steps.

501: The management device determines, based on the physical topology relationship of the node device, a level-1 parent node device in the node device managed by the management device.

The management device may determine, based on the physical topology relationship of the node device managed by the management device, the level-1 parent node device in the node device managed by the management device. For example, as shown in FIG. 1, the CCO may determine that a STA1, a STA4, a STA5, and a STA6 are level-1 parent node devices.

502: The management device determines whether a total quantity of child node devices in a branch included in each level-1 parent node device is less than or equal to K2. If yes, step 507 is performed, and if no, step 503 is performed.

The management device may determine whether the total quantity of child node devices in the branch included in each level-1 parent node device is less than or equal to K2, where K2 is a maximum value of node devices included in each group. If yes, step 507 is performed, and if no, step 503 is performed. For example, as shown in FIG. 1, if K2 = 3, and the group quantity is four, the management device may determine, through determining, to classify a child node device of a branch included in the level-1 parent node device STA1 and the STA1 into a same group, classify the STA4 into a new group, classify the STA5 into a new group, and classify the STA6 and a STA7 into a same group. Subsequently, the management device may allocate corresponding sharing duration to each group. For details, refer to FIG. 3B. As shown in FIG. 3B, the management device may allocate first sharing duration to a group including the STA1 to the STA3, allocate second sharing duration to the STA4, allocate third sharing duration to the STA5, and allocate fourth sharing duration to the STA6 and the STA7. In an example shown in FIG. 3B, same sharing duration is allocated to a same-level branch, so that when there is one or more pieces of fault reporting information in the branch, and the reported information is not successfully parsed (for example, a packet is lost or a conflict occurs during packet sending), the management device may disconnect the branch from a parent node of the branch, to achieve an objective of zone selective protection. Therefore, running of another branch is not affected. This is a backup protection mechanism.

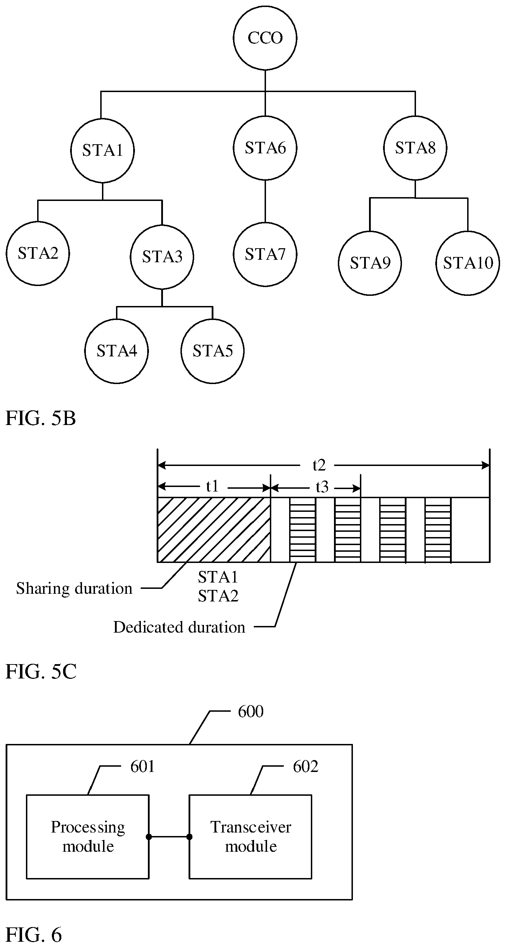

For another example, as shown in FIG. 5B, if the group quantity is three and K2 = 4, it can be learned that the management device may classify the STA6 and the STA7 into a same group, and classify a STA8, a STA9, and a STA10 into a same group. A sum of one level-1 branch STA1 and a quantity of node devices included in the level-1 branch STA1 is greater than four. Therefore, the management device needs to further divide the level-1 branch.

503: The management device determines that a quantity of child node devices in a first level-2 branch included in a second parent node device is less than or equal to K2.

In step 502, the management device determines, through determining, that the total quantity of child node devices in the branch included in each level-1 parent node device is greater than K2. Therefore, the management device further determines whether a quantity of child node devices included in each first level-2 branch included in the second parent node device is less than or equal to K2. If the management device determines that the quantity of child node devices included in the first level-2 branch included in the second parent node device is less than or equal to K2, step 504 is performed. For example, as shown in FIG. 5B, for the level-1 parent node device STA1, it may be determined that a quantity of child node devices included in a level-2 branch STA2 included in the level-1 parent node device is less than four, and a quantity of child node devices included in a level-2 branch STA3 included in the level-1 parent node device is less than four.

It should be noted that, if the management device determines that the quantity of child node devices included in the first level-2 branch included in the second parent node device is greater than K2, the management device re-determines a status of each level-3 branch included in the first level-2 branch, and a specific determining process is similar to the determining manner of the first parent node device and the level-2 branch. Details are not described herein again. A grouping process of another level-2 branch included in the second parent node device is similar. In addition, the second parent node device may be classified into a group including a minimum quantity of nodes after the level-3 branch is grouped.

504: The management device determines whether a sum of the total quantity of child node devices in the first level-2 branch and a total quantity of child node devices in a branch included in a first level-1 parent node device is less than or equal to K2. If yes, step 505 is performed, and if no, step 506 is performed.

The management device determines whether the sum of the total quantity of child node devices in the first level-2 branch and the total quantity of child node devices in the branch included in the first level-1 parent node device is less than or equal to K2. If yes, step 505 is performed, and if no, step 506 is performed. For example, as shown in FIG. 5B, the management device determines whether a total quantity of child node devices of one level-2 branch STA2 and child node devices of a level-1 branch STA6 or a level-1 branch STA8 is less than or equal to four, and determines whether a total quantity of child node devices of one level-2 branch STA3 and child node devices of a level-1 branch STA6 or a level-1 branch STA8 is less than or equal to four.

505: The management device classifies a child node device in a branch included in the child node device included in the first level-2 branch and the child node device in the branch included in the first level-1 parent node device into a same group.

The management device determines a total quantity of child node devices in the branch included in the child node device included in the first level-2 branch, and classifies the child node devices in the branch included in the child node device included in the first level-2 branch and the child node device in the branch included in the first level-1 parent node device into the same group. For example, as shown in FIG. 5B, a total quantity of child node devices of the level-2 branch STA2 and child node devices of the level-1 branch STA6 is three. Therefore, the management device may classify the STA2 and the level-1 branch STA6 into a same group.

506: The management device classifies the child node device in the branch included in the first level-2 branch into a new group.

The management device may classify the child node device in the branch included in the first level-2 branch into the new group. For example, the management device determines that a quantity of child node devices included in the level-2 branch STA3 is three, and a sum of the three child node devices and a quantity of child node devices of the level-1 branch STA6 or the level-1 branch STA8 is greater than four. Therefore, the management device may classify the level-2 branch STA3 and the STA1 into a new group. In other words, the new group includes the STA1, the STA3, the STA4, and the STA5.

507: The management device classifies the first level-1 parent node device and the child node device included in the first level-1 parent node device into a new group.

In step 502, when the management device determines that a sum of one first level-1 parent node device and a quantity of child node devices included in the first level-1 parent node device is less than or equal to K2, the management device may classify the first level-1 parent node device and the child node device included in the first level-1 parent node device into the new group. For example, as shown in FIG. 5B, a quantity of child node devices included in the level-1 branch STA6 is two. Therefore, the management device may classify the level-1 branch STA6 into a new group. In other words, the new group includes the STA6 and the STA7. The same applies to the level-1 branch STA8. Details are not described again.

It should be noted that, after the first level-1 parent node device is classified into a corresponding group, if a quantity of node devices included in another level-1 parent node device is less than K2, and a sum of one first level-1 parent node device and the quantity of child node devices included in the another first level-1 parent node device is also less than or equal to K2, the another level-1 parent node device, the child node devices included in the first level-1 parent node device, and the first level-1 parent node device may be classified into a same group. In other words, when groups are combined, branches of a same level may be preferably combined, and an upper-level branch is considered only when a condition is not met.

In this embodiment, in a grouping process, if the group quantity reaches a maximum value, a node device that is not classified may be split and filled into an allocated group one by one, and is first filled into a group in a branch in which the node device is located. If a quantity of node devices included in a group in a branch in which the node device is located reaches K2, the node device is filled into a group in which an upper-level branch that meets a condition is located.

405: The management device sends a first notification message to a first node device and a second node device in a first group.

After completing grouping, the management device may send the first notification message to the first node device and the second node device in the first group. The first notification message is used to notify that the first node device corresponds to first sharing duration and the second node device corresponds to second sharing duration, and the first notification message is used by the first node device and the second node device to determine contention duration.

406: The management device receives a first packet sent by the first node device in the first group and a second packet sent by the second node device in the first group.

The first node device and the second node device in the first group may determine, based on the first notification message, corresponding first sharing duration. Then, the first node device and the second node device respectively send the first packet and the second packet within the first sharing duration by contending for a channel, and the another node device and the management device may receive the first packet and the second packet. The first packet and the second packet are used to notify the another node device to perform disconnection for protection or not to perform an action.

407: The management device parses the first packet and the second packet to obtain a parsing result.

After receiving the first packet and the second packet, the management device may parse the packets to obtain the parsing result. In this step, if neither the first packet nor the second packet is successfully parsed by the management device, and a receive power at which the management device receives a packet is greater than a preset threshold, step 410 is performed. However, if the management device successfully parses the first packet and the second packet, the management device no longer allocates dedicated duration to the first node device and the second node device.

408: The management device sends a second notification message to the first node device and the second node device.

When the management device determines, after parsing the first packet and the second packet, that parsing fails, and the receive power at which the management device receives the packet within the first sharing duration is greater than the preset threshold, the management device may determine that a conflict occurs during packet sending. In other words, the first node device and the second node device simultaneously obtain the channel through contention within the first sharing duration and send the packets through the channel, and an error occurs during packet sending. After the management device receives the packets, a parsing error occurs. The management device may send the second notification message to the first node device and the second node device. The second notification message is used to notify that first dedicated duration corresponds to the first node device and the second dedicated duration corresponds to the second node device. The first dedicated duration is used by the first node device to send the first packet, and the second dedicated duration is used by the second node device to send the second packet. As shown in FIG. 3A, the first dedicated duration and the second dedicated duration may be a part of the contention duration originally allocated by the management device. The management device notifies, by delivering the notification message, the node device to use corresponding dedicated duration to send the packet, to ensure that the node device can successfully send the packet.

It should be noted that the management device may allocate one or more pieces of dedicated duration to the first node device and the second node device. This is not specifically limited. For example, FIG. 5C is an enlarged schematic diagram of the first sharing duration and the second contention duration in FIG. 3B. The management device may allocate first dedicated duration and third dedicated duration shown in FIG. 5C to the first node device, and allocate second dedicated duration and fourth dedicated duration to the second node device. A plurality of pieces of dedicated duration are allocated, and when a packet needs to be sent in dedicated duration, the first node device and the second node device may send the packet in corresponding dedicated duration.

In this embodiment, the dedicated duration may be time division multiple access (time division multiple access, TDMA) duration.

409: The management device receives the first packet sent by the first node device within the first dedicated duration, and receives the second packet sent by the second node device within the second dedicated duration.

The first node device may send the first packet within the first dedicated duration, and the management device may receive the first packet. The second node device may send the second packet within the second dedicated duration, and the management device may receive the second packet. Then, the management device may parse the first packet and the second packet.

It should be noted that, if the management device allocates the plurality of pieces of dedicated duration to the first node device and the second node device, and the management device does not receive, within the preset duration, the packets sent by the first node device and the second node device, the management device may deliver a third notification message to the first node device and the second node device, and the third notification message is used to notify the first node device and the second node device of a current latest duration allocation status. A specific allocation status may be that the management device reclaims the originally allocated dedicated duration and restores the originally allocated dedicated duration to the contention duration, for contention use of all node devices. The preset duration may be preset by a system. As shown in FIG. 5C, the preset duration may be t3. In other words, a setting standard of the preset duration is to determine, based on whether a packet is sent within the first dedicated duration allocated to the first node device and the second node device in the group, whether the node device has a to-be-sent packet. If the management device does not receive a corresponding packet within the duration, it may be understood that the node device does not have the to-be-sent packet.

In the embodiments of this application, the management device may allocate the first sharing duration to the first group, and allocate the second sharing duration to the second group. The at least one node device included in the first group corresponds to the first sharing duration, and the at least one node device may send the service packet within the first sharing duration. The at least one node device included in the second group corresponds to the second sharing duration, and the at least one node device may send the service packet within the second sharing duration. The management device may allocate the contention duration to the node device managed by the management device, and the contention duration is used by the node device managed by the management device to send the service packet. Then, the management device may send the at least one first notification message, to notify first sharing duration that corresponds to the at least two node devices included in the first group and the contention duration, and notify second sharing duration that corresponds to the at least two node devices included in the second group and the contention duration. Therefore, the at least one node device included in the first group and the at least one node device included in the second group do not preempt the sharing duration of each other. This can reduce or avoid, to some extent, the problem that the conflict occurs during service packet sending because all the node devices simultaneously send the service packets by contending for the channel, thereby ensuring that the latency requirement can be satisfied, and better meeting the low-latency requirement of the zone selective protection function in the low-voltage power distribution network scenario.

The foregoing describes the time allocation method in the embodiments of this application. The following describes a time allocation apparatus 600 in the embodiments of this application. Referring to FIG. 6, an embodiment of the time allocation apparatus 600 in the embodiments of this application includes:
a processing module 601, configured to allocate first sharing duration to a first group, and allocate second sharing duration to a second group, where the first group includes at least one node device managed by the management device, and the second group includes at least one node device managed by the management device, the first sharing duration is used by the at least one node device included in the first group to send a service packet, and the second sharing duration is used by the at least one node device included in the second group to send a service packet, where
the processing module 601 is configured to allocate contention duration to a node device managed by the management device, where the contention duration is used by the node device managed by the management device to send a service packet by contending for a channel; and
a transceiver module 602, configured to send at least one first notification message, where the at least one first notification message is used to notify that the at least one node device included in the first group corresponds to the first sharing duration and the at least one node device included in the second group corresponds to the second sharing duration, and is used to determine the contention duration by the at least one node device included in the first group and the at least one node device included in the second group.

In a possible implementation, the processing module 601 is further configured to:
determine a group quantity, where the group quantity is a quantity of groups obtained after the management device groups the node device managed by the management device; and
determine a node device corresponding to each group in the group quantity.

In another possible implementation, the processing module 601 is specifically configured to:
determine the group quantity based on preset latency requirement duration and transmission duration of the service packet.

In another possible implementation, the processing module 601 is specifically configured to:
determine, based on a total quantity of node devices managed by the management device, the group quantity, and a first preset rule, a quantity of node devices corresponding to each group; and
determine, based on the total quantity of node devices managed by the management device, the quantity of node devices corresponding to each group, and a second preset rule, the node device corresponding to each group.

In another possible implementation, the processing module 601 is specifically configured to:
determine that the quantity of node devices corresponding to each group is K, where K is greater than or equal to K1 and is less than or equal to K2, K1 = n/(g - m), K2 = n/(g + m), n is the total quantity of node devices managed by the management device, g is the group quantity, and m is a preset floating range value.

In another possible implementation, the processing module 601 is specifically configured to:
determine, based on a physical topology relationship of the node device, a level-1 node device in the node device managed by the management device;
determine whether a total quantity of child node devices in a branch included in the level-1 parent node device is less than or equal to K2, where K2 = n/(g + m), n is the total quantity of node devices managed by the management device, g is the group quantity, and m is a preset floating range value; and
if yes, classify the level-1 parent node device and the child node devices in the branch included in the level-1 parent node device into a same group.

In a possible implementation, the level-1 parent node device includes a first level-1 parent node device and a second level-1 parent node device, and if a total quantity of child node devices included in the second level-1 parent node device is greater than K2, and a quantity of child node devices in a branch included in the first level-1 parent node device is less than or equal to K2, the processing module 601 is specifically configured to:
determine a level-2 child node device included in the second level-1 parent node device;
determine that a total node quantity of child node devices in a branch included in each level-2 child node device is less than or equal to K2;
determine whether a sum of the total node quantity child node devices in the branch included in the level-2 child node device and a quantity node child node devices in the branch included in the first level-1 parent node device is less than or equal to K2; and
if yes, classify the child node devices in the branch included in the level-2 child node device and the child node devices in the branch included in the first level-1 parent node device into a same group; or
if no, classify the level-2 child node device and the child node devices in the branch included in the level-2 child node device into a group.

In another possible implementation, sharing duration and the contention duration are distributed at intervals within the preset latency requirement duration, a time interval between the sharing duration and the sharing duration is t2, the sharing duration is t1, the contention duration is t2 - t1, t2 = T/g, T is the preset latency requirement duration, g is the group quantity, and t1 is less than or equal to the transmission duration of the service packet.

In a possible implementation, the first group includes a first node device and a second node device, and the transceiver module 602 is further configured to:
when the first node device and the second node device execute services within the first sharing duration, receive a first packet sent by the first node device and a second packet sent by the second node device;
the processing module 601 is further configured to:
   if the time allocation apparatus fails to parse the first packet and the second packet, and a receive power at which the time allocation apparatus receives a packet within the first sharing duration is greater than a preset threshold, allocate first dedicated duration to the first node device, and allocate second dedicated duration to the second node device, where the first dedicated duration is used by the first node device to send the first packet, and the second dedicated duration is used by the second node device to send the second packet; and
the transceiver module 602 is further configured to:
   send at least one second notification message, where the at least one second notification message is used to indicate that the first node device corresponds to the first dedicated duration and the second node device corresponds to the second dedicated duration.

In the embodiments of this application, the processing module 601 may allocate the first sharing duration to the first group, and allocate the second sharing duration to the second group. The at least one node device included in the first group corresponds to the first sharing duration, and the at least one node device may send the service packet within the first sharing duration. The at least one node device included in the second group corresponds to the second sharing duration, and the at least one node device may send the service packet within the second sharing duration. The processing module 601 may allocate the contention duration to the node device managed by the management device, and the contention duration is used by the node device managed by the management device to send the service packet. Then, the transceiver module 602 may send the at least one first notification message, to notify first sharing duration that corresponds to at least two node devices included in the first group and the contention duration, and notify second sharing duration that corresponds to at least two node devices included in the second group and the contention duration. Therefore, the at least one node device included in the first group and the at least one node device included in the second group do not preempt the sharing duration of each other. This can reduce or avoid, to some extent, a problem that a conflict occurs during service packet sending because all node devices simultaneously send service packets by contending for a channel, thereby ensuring that a latency requirement can be satisfied, and better meeting a low-latency requirement of a zone selective protection function in a low-voltage power distribution network scenario.

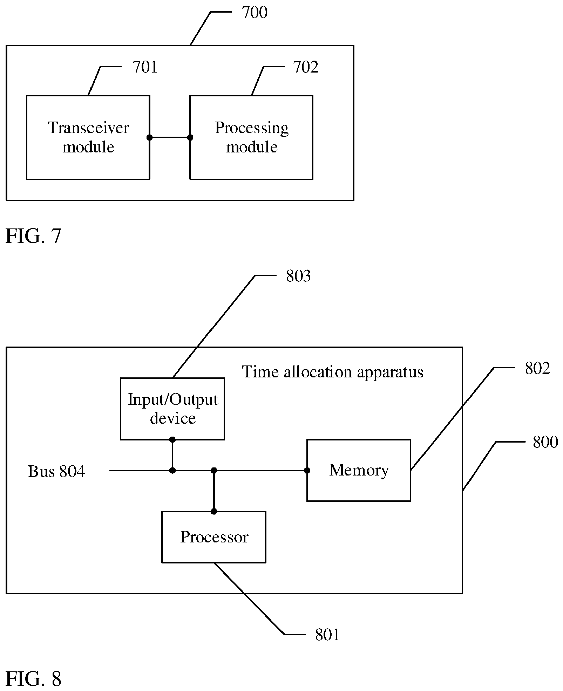

The foregoing describes the time allocation method in the embodiments of this application. The following describes a time allocation apparatus 700 in the embodiments of this application. Referring to FIG. 7, an embodiment of the time allocation apparatus 700 in the embodiments of this application includes:
a transceiver module 701, configured to receive a first notification message sent by a management device; and
a processing module 702, configured to: determine sharing duration allocated by the management device to the first node device and determine contention duration based on the first notification message, where
the transceiver module 701 is configured to: send a service packet within the sharing duration, and send a service packet within the contention duration by contending for a channel.

In a possible implementation, the sharing duration corresponds to the first node device and a second node device, and the transceiver module 701 is specifically configured to:
send the service packet within the sharing duration in a manner of contending for the channel with the second node device.

In another possible implementation, when the management device fails to parse the service packet, the transceiver module 701 is further configured to:
receive a second notification message sent by the management device;
the processing module 702 is further configured to:
   determine, based on the second notification message, dedicated duration allocated by the management device to the first node device; and
the transceiver module 701 is further configured to:
   send the service packet to the management device again within the dedicated duration.

In the embodiments of this application, the transceiver module 701 may receive the first notification message sent by the management device. Then, the processing module 702 may determine, based on the first notification message, the sharing duration allocated by the management device to the processing module 702 to send the service packet. Then, the transceiver module 701 sends the service packet within the sharing duration. A node device in another group also has corresponding sharing duration, and therefore the node device does not preempt sharing duration of other groups. This can reduce or avoid, to some extent, a problem that a conflict occurs during service packet sending because all node devices simultaneously send service packets by contending for a channel, thereby ensuring that a latency requirement can be satisfied, and better meeting a low-latency requirement of a zone selective protection function in a low-voltage power distribution network scenario.

This application further provides a time allocation apparatus 800. Referring to FIG. 8, an embodiment of the time allocation apparatus in the embodiments of this application includes:
a processor 801, a memory 802, an input/output device 803, and a bus 804.

In a possible implementation, the processor 801, the memory 802, and the input/output device 803 are separately connected to the bus 804, and the memory stores a computer instruction.

The processing module 601 in the foregoing embodiment may specifically be the processor 801 in this embodiment. Therefore, specific implementation of the processor 801 is not described again. The transceiver module 602 in the foregoing embodiment may specifically be the input/output device 803 in this embodiment.

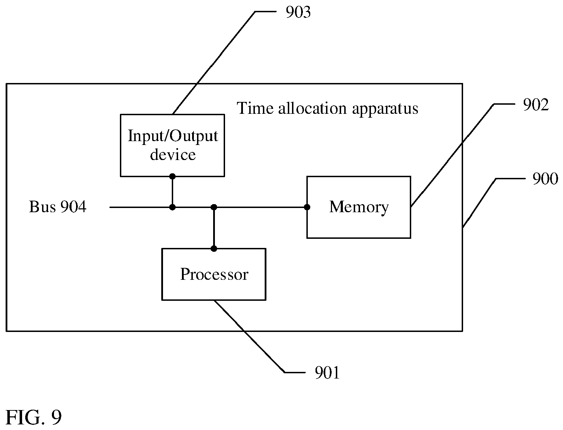

This application further provides another time allocation apparatus 900. Referring to FIG. 9, an embodiment of the time allocation apparatus in the embodiments of this application includes:
a processor 901, a memory 902, an input/output device 903, and a bus 904.

In a possible implementation, the processor 901, the memory 902, and the input/output device 903 are separately connected to the bus 904, and the memory stores a computer instruction.

The processing module 702 in the foregoing embodiment may specifically be the processor 901 in this embodiment. Therefore, specific implementation of the processor 901 is not described again. The transceiver module 701 in the foregoing embodiment may specifically be the input/output device 903 in this embodiment.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In another possible design, when the management device or the node device is a chip in a terminal, the chip includes a processing unit and a communications unit. The processing unit may be, for example, a processor. The communications unit may be, for example, an input/output interface, a pin, or a circuit. The processing unit may execute a computer-executable instruction stored in a storage unit, so that the chip in the terminal performs the time allocation method in any one of the first aspect or the second aspect. Optionally, the storage unit is a storage unit in the chip such as a register or a buffer. Alternatively, the storage unit may be a storage unit in the terminal but outside the chip such as a read-only memory (read-only memory, ROM), another type of static storage device capable of storing static information and instructions, or a random access memory (random access memory, RAM).

The processor mentioned above may be a general-purpose central processing unit (CPU), a microprocessor, an application-specific integrated circuit (application-specific integrated circuit, ASIC), or one or more integrated circuits configured to control program execution of the time allocation method in the first aspect.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A time allocation method, comprising:
allocating (201), by a management device, a first sharing duration to a first group, and allocating a second sharing duration to a second group, wherein the first group comprises at least one node device managed by the management device, and the second group comprises at least one node device managed by the management device, the first sharing duration is used by the at least one node device comprised in the first group to send a service packet, and the second sharing duration is used by the at least one node device comprised in the second group to send a service packet;
allocating (202), by the management device, a contention duration to a node device managed by the management device, wherein the contention duration is used by the node device managed by the management device to send a service packet by contending for a channel; and
sending (203, 405), by the management device, at least one first notification message, wherein the at least one first notification message is used to notify that the at least one node device comprised in the first group corresponds to the first sharing duration and the at least one node device comprised in the second group corresponds to the second sharing duration, and is used to determine the contention duration by the at least one node device comprised in the first group and the at least one node device comprised in the second group;
wherein before the allocating, by the management device, the first sharing duration to the first group, and allocating the second sharing duration to the second group, the method further comprises:
determining, by the management device, a quantity of groups, wherein the quantity of groups is a quantity of groups obtained after the management device groups the node device managed by the management device; and
determining, by the management device, a node device corresponding to each group in the obtained groups; and
the determining, by the management device, a quantity of groups comprises:
determining (402), by the management device, the quantity of groups based on preset required latency duration and transmission duration of the service packet.

2. The method according to claim 1, wherein the determining, by the management device, the node device corresponding to each group in the obtained groups comprises:
determining (403), by the management device based on a total quantity of node devices managed by the management device, the quantity of groups, and a first preset rule, a quantity of node devices corresponding to each group; and
determining (404), by the management device based on the total quantity of node devices managed by the management device, the quantity of node devices corresponding to each group, and a second preset rule, the node device corresponding to each group.

3. The method according to claim 2, wherein the first preset rule comprises:
determining, by the management device, that the quantity of node devices corresponding to each group is K, wherein K is greater than or equal to K1 and is less than or equal to K2, K1 = n/(g - m), K2 = n/(g + m), n is the total quantity of node devices managed by the management device, g is the quantity of groups, and m is a preset floating range value.

4. The method according to claim 2, wherein the second preset rule comprises:
determining (501), by the management device based on a physical topology relationship of the node device, a level-1 node device in the node device managed by the management device;
determining (502), by the management device, whether a total quantity of child node devices in a branch comprised in the level-1 parent node device is less than or equal to K2, wherein K2 = n/(g + m), n is the total quantity of node devices managed by the management device, g is the quantity of groups, and m is a preset floating range value; and
if yes, classifying (507), by the management device, the level-1 parent node device and the child node devices in the branch comprised in the level-1 parent node device into a same group.

5. The method according to claim 4, wherein the level-1 parent node device comprises a first level-1 parent node device and a second level-1 parent node device, and if a total quantity of child node devices comprised in a branch in which the second level-1 parent node device is located is greater than K2, and a quantity of child node devices in a branch comprised in the first level-1 parent node device is less than or equal to K2, the method further comprises:
determining, by the management device, a level-2 child node device comprised in the second level-1 parent node device;
determining, by the management device, that a total quantity of child node devices in a branch comprised in each level-2 child node device is less than or equal to K2;
determining (504), by the management device, whether a sum of the total quantity of child node devices in the branch comprised in the level-2 child node device and a quantity of child node devices in the branch comprised in the first level-1 parent node device is less than or equal to K2; and
if yes, classifying (505), by the management device, the child node devices in the branch comprised in the level-2 child node device and the child node devices in the branch comprised in the first level-1 parent node device into a same group; or
if no, classifying (506), by the management device, the level-2 child node device and the child node devices in the branch comprised in the level-2 child node device into a new group.

6. The method according to any one of claims 1 to 5,
wherein sharing duration and the contention duration are distributed at intervals within the preset required latency duration, a time interval between the sharing duration and the sharing duration is t2, the sharing duration is t1, the contention duration is t2 - t1, T is the preset required latency duration, g is the quantity of groups, and t1 is less than or equal to the transmission duration of the service packet.

7. The method according to any one of claims 1 to 6, wherein the first group comprises a first node device and a second node device, and the method further comprises:
when the first node device and the second node device execute services within the first sharing duration, receiving, by the management device, a first packet sent by the first node device and a second packet sent by the second node device;
if the management device fails to parse (407) the first packet and the second packet, and a receive power at which the management device receives a packet within the first sharing duration is greater than a preset threshold, allocating, by the management device, first dedicated duration to the first node device, and allocating second dedicated duration to the second node device, wherein the first dedicated duration is used by the first node device to send the first packet, and the second dedicated duration is used by the second node device to send the second packet; and
sending (408), by the management device, at least one second notification message, wherein the at least one second notification message is used to indicate that the first node device corresponds to the first dedicated duration and the second node device corresponds to the second dedicated duration.

8. The method according to claim 1, wherein the method comprises:
receiving (405), by a first node device, the first notification message sent by the management device;
determining, by the first node device based on the first notification message, a sharing duration allocated by the management device to the first node device and determining a contention duration; and
sending (406, 409), by the first node device, a service packet within the sharing duration, and sending a service packet within the contention duration by contending for a channel.

9. The method according to claim 8, wherein the sharing duration corresponds to the first node device and a second node device, and the sending (406, 409), by the first node device, a service packet within the sharing duration comprises:
sending (409), by the first node device, the service packet within the sharing duration in a manner of contending for the channel with the second node device.

10. The method according to claim 8 or 9, wherein when the management device fails to parse (407) the service packet, the method further comprises:
receiving (408), by the first node device, a second notification message sent by the management device;
determining, by the first node device based on the second notification message, dedicated duration allocated by the management device to the first node device; and
sending (406, 409), by the first node device, the service packet to the management device again within the dedicated duration.

11. A management device (600, 700, 800), comprising:
a processing module (601, 701, 801), configured to allocate a first sharing duration to a first group, and allocate a second sharing duration to a second group, wherein the first group comprises at least one node device managed by the management device, and the second group comprises at least one node device managed by the management device, the first sharing duration is used by the at least one node device comprised in the first group to send a service packet, and the second sharing duration is used by the at least one node device comprised in the second group to send a service packet, wherein
the processing module is configured to allocate a contention duration to a node device managed by the management device,
wherein the contention duration is used by the node device managed by the management device to send a service packet by contending for a channel; and
a transceiver module (602, 702), configured to send at least one first notification message, wherein the at least one first notification message is used to notify that the at least one node device comprised in the first group corresponds to the first sharing duration and the at least one node device comprised in the second group corresponds to the second sharing duration, and is used to determine the contention duration by the at least one node device comprised in the first group and the at least one node device comprised in the second group; and
wherein the processing module is further configured to, before allocating the first sharing duration to the first group and allocating the second sharing duration to the second group:
determine a quantity of groups, wherein the quantity of groups is a quantity of groups obtained after the management device groups the node device managed by the management device; and
determine a node device corresponding to each group in the obtained groups;
wherein the processing module is specifically configured to:
determine the quantity of groups based on a preset required latency duration and transmission duration of the service packet.

12. System comprising a management device (600, 700, 800) according to claim 11 and a first node, wherein the first node comprises:
a transceiver module (602, 702), configured to receive a first notification message sent by the management device; and
a processing module (601, 701), configured to: determine, based on the first notification message, sharing duration allocated by the management device to the first node device and determine contention duration, wherein
the transceiver module is configured to: send a service packet within the sharing duration, and send a service packet within the contention duration by contending for a channel.

## Patentansprüche

1. Verfahren zur Zeitzuteilung, das Folgendes umfasst:
Zuteilen (201) einer ersten Dauer der gemeinsamen Nutzung für eine erste Gruppe und Zuteilen einer zweiten Dauer der gemeinsamen Nutzung für eine zweite Gruppe durch eine Verwaltungsvorrichtung, wobei die erste Gruppe mindestens eine Knotenvorrichtung umfasst, die durch die Verwaltungsvorrichtung verwaltet wird, und die zweite Gruppe mindestens eine Knotenvorrichtung umfasst, die durch die Verwaltungsvorrichtung verwaltet wird, die erste Dauer der gemeinsamen Nutzung von der mindestens einen Knotenvorrichtung, die in der ersten Gruppe umfasst ist, verwendet wird, um ein Dienstpaket zu senden, und die zweite Dauer der gemeinsamen Nutzung von der mindestens einen Knotenvorrichtung, die in der zweiten Gruppe umfasst ist, verwendet wird, um ein Dienstpaket zu senden;
Zuteilen (202) einer Konkurrenzdauer durch eine Verwaltungsvorrichtung für eine Knotenvorrichtung, die durch die Verwaltungsvorrichtung verwaltet wird, wobei die Konkurrenzdauer von der Knotenvorrichtung, die durch die Verwaltungsvorrichtung verwaltet wird, verwendet wird, um durch Konkurrieren um einen Kanal ein Dienstpaket zu senden; und
Senden (203, 405) von mindestens einer Benachrichtigungsnachricht durch die Verwaltungsvorrichtung, wobei die mindestens eine Benachrichtigungsnachricht verwendet wird, um mitzuteilen, dass die mindestens eine Knotenvorrichtung, die in der ersten Gruppe umfasst ist, der ersten Dauer der gemeinsamen Nutzung entspricht und die mindestens eine Knotenvorrichtung, die in der zweiten Gruppe umfasst ist, der zweiten Dauer der gemeinsamen Nutzung entspricht, und verwendet wird, um die Konkurrenzdauer durch die mindestens eine Knotenvorrichtung, die in der ersten Gruppe umfasst ist, und die mindestens eine Knotenvorrichtung, die in der zweiten Gruppe umfasst ist, zu bestimmen;
wobei das Verfahren vor dem Zuteilen der ersten Dauer der gemeinsamen Nutzung für die erste Gruppe
und dem Zuteilen der zweiten Dauer der gemeinsamen Nutzung für die zweite Gruppe durch die Verwaltungsvorrichtung Folgendes umfasst:
Bestimmen einer Menge von Gruppen durch die Verwaltungsvorrichtung, wobei die Menge von Gruppen eine Menge von Gruppen ist, die erhalten wird, nachdem die Verwaltungsvorrichtung die Knotenvorrichtung, die durch die Verwaltungsvorrichtung verwaltet wird, gruppiert hat; und
Bestimmen einer Knotenvorrichtung, die jeder Gruppe in den erhaltenen Gruppen entspricht, durch die Verwaltungsvorrichtung und
das Bestimmen einer Menge von Gruppen durch die Verwaltungsvorrichtung umfasst Folgendes:
Bestimmen (402) der Menge von Gruppen durch die Verwaltungsvorrichtung basierend auf einer voreingestellten erforderlichen Latenzdauer und Übertragungsdauer des Dienstpakets.

2. Verfahren nach Anspruch 1, wobei das Bestimmen der Knotenvorrichtung, die jeder Gruppe in den erhaltenen Gruppen entspricht, durch die Verwaltungsvorrichtung Folgendes umfasst:
Bestimmen (403), durch die Verwaltungsvorrichtung, basierend auf einer Gesamtmenge von Knotenvorrichtungen, die durch die Verwaltungsvorrichtung verwaltet werden, der Menge von Gruppen und einer ersten voreingestellten Regel, wobei eine Menge von Knotenvorrichtungen jeder Gruppe entspricht und
Bestimmen (404), durch die Verwaltungsvorrichtung, basierend auf einer Gesamtmenge von Knotenvorrichtungen, die durch die Verwaltungsvorrichtung verwaltet werden, der Menge von Knotenvorrichtungen, die jeder Gruppe entsprechen, und einer zweiten voreingestellten Regel, wobei die Knotenvorrichtung jeder Gruppe entspricht.

3. Verfahren nach Anspruch 2, wobei die erste voreingestellte Regel Folgendes umfasst:
Bestimmen, durch die Verwaltungsvorrichtung, dass die Menge von Knotenvorrichtungen, die jeder Gruppe entspricht, K ist, wobei K größer als oder gleich K1 und kleiner als oder gleich K2 ist, K1 = n/(g - m), K2 = n/(g + m), n die Gesamtmenge von Knotenvorrichtungen ist, die durch die Verwaltungsvorrichtung verwaltet werden, g die Menge von Gruppen ist und m ein voreingestellter Gleitbereichswert ist.

4. Verfahren nach Anspruch 2, wobei die zweite voreingestellte Regel Folgendes umfasst:
Bestimmen (501) einer Ebene-1-Knotenvorrichtung in der Knotenvorrichtung, die durch die Verwaltungsvorrichtung verwaltet wird, durch die Verwaltungsvorrichtung basierend auf einer physischen Topologiebeziehung der Knotenvorrichtung;
Bestimmen (502), durch die Verwaltungsvorrichtung, ob eine Gesamtmenge von Kindknotenvorrichtungen in einem Zweig, der in der Ebene-1-Elternknotenvorrichtung umfasst ist, kleiner als oder gleich K2 ist, wobei K2 = n/(g + m), n die Gesamtmenge von Knotenvorrichtungen ist, die durch die Verwaltungsvorrichtung verwaltet werden, g die Menge von Gruppen ist und m ein voreingestellter Gleitbereichswert ist; und
wenn ja, Klassifizieren (507) der Ebene-1-Elternknotenvorrichtung und der Kindknotenvorrichtungen in dem Zweig, der in der Ebene-1-Elternknotenvorrichtung umfasst ist, durch die Verwaltungsvorrichtung in eine selbe Gruppe.

5. Verfahren nach Anspruch 4, wobei die Ebene-1-Elternknotenvorrichtung eine erste Ebene-1-Elternknotenvorrichtung und eine zweite Ebene-1-Elternknotenvorrichtung umfasst und, wenn eine Gesamtmenge von Kindknotenvorrichtungen, die in einem Zweig umfasst sind, in dem sich der zweite Ebene-1-Elternknotenvorrichtung befindet, größer als K2 ist und eine Menge von Kindknotenvorrichtungen in einem Zweig, der in der ersten Ebene-1-Elternknotenvorrichtung umfasst ist, kleiner als oder gleich K2 ist, das Verfahren ferner Folgendes umfasst:
Bestimmen einer Ebene-2-Kindknotenvorrichtung, die in der zweiten Ebene-1-Elternknotenvorrichtung umfasst ist, durch die Verwaltungsvorrichtung;
Bestimmen, durch die Verwaltungsvorrichtung, dass eine Gesamtmenge von Kindknotenvorrichtungen in einem Zweig, der in jeder Ebene-2-Kindknotenvorrichtung umfasst ist, kleiner als oder gleich K2 ist;
Bestimmen (504), durch die Verwaltungsvorrichtung, ob eine Summe der Gesamtmenge von Kindknotenvorrichtungen in dem Zweig, der in der Ebene-2-Kindknotenvorrichtung umfasst ist, und einer Menge von Kindknotenvorrichtungen in dem Zweig, der in der ersten Ebene-1-Elternknotenvorrichtung umfasst ist, kleiner als oder gleich K2 ist; und
wenn ja, Klassifizieren (505) der Kindknotenvorrichtungen in dem Zweig, der in der Ebene-2-Kindknotenvorrichtung umfasst ist, und der Kindknotenvorrichtungen in dem Zweig, der in der ersten Ebene-1-Elternknotenvorrichtung umfasst ist, durch die Verwaltungsvorrichtung in eine selbe Gruppe oder
wenn nein, Klassifizieren (506) der Ebene-2-Kindknotenvorrichtung und der Kindknotenvorrichtungen in dem Zweig, der in der Ebene-2-Kindknotenvorrichtung umfasst ist, durch die Verwaltungsvorrichtung in eine neue Gruppe.

6. Verfahren nach einem der Ansprüche 1 bis 5,
wobei die Dauer der gemeinsamen Nutzung und die Konkurrenzdauer in Intervallen innerhalb der voreingestellten erforderlichen Latenzdauer verteilt sind, ein Zeitintervall zwischen der Dauer der gemeinsamen Nutzung und der Dauer der gemeinsamen Nutzung t2 ist, die Dauer der gemeinsamen Nutzung t1 ist, die Konkurrenzdauer t2 - t1 ist, T die voreingestellte erforderliche Latenzdauer ist, g die Menge von Gruppen ist und t1 kleiner als oder gleich der Übertragungsdauer des Dienstpakets ist.

7. Verfahren nach einem der Ansprüche 1 bis 6, wobei die erste Gruppe eine erste Knotenvorrichtung und eine zweite Knotenvorrichtung umfasst und das Verfahren ferner Folgendes umfasst:
wenn die erste Knotenvorrichtung und die zweite Knotenvorrichtung Dienste innerhalb der ersten Dauer der gemeinsamen Nutzung ausführen, Empfangen eines ersten Pakets, das von der ersten Knotenvorrichtung gesendet wird, und eines zweiten Pakets, das von der zweiten Knotenvorrichtung gesendet wird, durch die Verwaltungsvorrichtung;
wenn die Verwaltungsvorrichtung das erste Paket und das zweite Paket nicht parst (407) und eine Empfangsleistung, mit der die Verwaltungsvorrichtung ein Paket innerhalb der ersten Dauer der gemeinsamen Nutzung empfängt, größer als ein voreingestellter Schwellwert ist, Zuteilen einer ersten dedizierten Dauer für die erste Knotenvorrichtung und Zuteilen einer zweiten dedizierten Dauer für die zweite Knotenvorrichtung durch die Verwaltungsvorrichtung, wobei die erste dedizierte Dauer von der ersten Knotenvorrichtung verwendet wird, um das erste Paket zu senden, und die zweite dedizierte Dauer von der zweiten Knotenvorrichtung verwendet wird, um das zweite Paket zu senden; und
Senden (408) von mindestens einer zweiten Benachrichtigungsnachricht durch die Verwaltungsvorrichtung, wobei die mindestens eine zweite Benachrichtigungsnachricht verwendet wird, um anzuzeigen, dass die erste Knotenvorrichtung der ersten dedizierten Dauer entspricht und die zweite Knotenvorrichtung der zweiten dedizierten Dauer entspricht.

8. Verfahren nach Anspruch 1, wobei das Verfahren Folgendes umfasst:
Empfangen (405) der ersten Benachrichtigungsnachricht, die durch die Verwaltungsvorrichtung gesendet wird, durch eine erste Knotenvorrichtung;
Bestimmen einer Dauer der gemeinsamen Nutzung, die der ersten Knotenvorrichtung durch die Verwaltungsvorrichtung zugeteilt wird, und Bestimmen einer Konkurrenzdauer durch die erste Knotenvorrichtung basierend auf der ersten Benachrichtigungsnachricht und
Senden (406, 409) eines Dienstpakets innerhalb der Dauer der gemeinsamen Nutzung durch die erste Knotenvorrichtung und Senden eines Dienstpakets innerhalb der Konkurrenzdauer durch Konkurrieren um einen Kanal.

9. Verfahren nach Anspruch 8, wobei die Dauer der gemeinsamen Nutzung der ersten Knotenvorrichtung und einer zweiten Knotenvorrichtung entspricht und das Senden (406, 409) eines Dienstpakets innerhalb der Dauer der gemeinsamen Nutzung durch die erste Knotenvorrichtung Folgendes umfasst:
Senden (409) des Dienstpakets innerhalb der Dauer der gemeinsamen Nutzung in einer Weise des Konkurrierens mit der zweiten Knotenvorrichtung um den Kanal durch die erste Knotenvorrichtung.

10. Verfahren nach Anspruch 8 oder 9, wobei das Verfahren, wenn die Verwaltungsvorrichtung das Dienstpaket nicht parst (407), ferner Folgendes umfasst:
Empfangen (408) einer zweiten Benachrichtigungsnachricht, die durch die Verwaltungsvorrichtung gesendet wird, durch die erste Knotenvorrichtung;
Bestimmen einer dedizierten Dauer, die der ersten Knotenvorrichtung durch die Verwaltungsvorrichtung zugeteilt wird, durch die erste Knotenvorrichtung basierend auf der zweiten Benachrichtigungsnachricht und
erneutes Senden (406, 409) des Dienstpakets durch die erste Knotenvorrichtung innerhalb der dedizierten Dauer an die Verwaltungsvorrichtung.

11. Verwaltungsvorrichtung (600, 700, 800), die Folgendes umfasst:
ein Verarbeitungsmodul (601, 701, 801), das dazu ausgelegt ist, einer ersten Gruppe eine erste Dauer der gemeinsamen Nutzung zuzuteilen und einer zweiten Gruppe eine zweite Dauer der gemeinsamen Nutzung zuzuteilen, wobei die erste Gruppe mindestens eine Knotenvorrichtung umfasst, die durch die Verwaltungsvorrichtung verwaltet wird, und die zweite Gruppe mindestens eine Knotenvorrichtung umfasst, die durch die Verwaltungsvorrichtung verwaltet wird, die erste Dauer der gemeinsamen Nutzung von der mindestens einen Knotenvorrichtung, die in der ersten Gruppe umfasst ist, verwendet wird, um ein Dienstpaket zu senden, und die zweite Dauer der gemeinsamen Nutzung von der mindestens einen Knotenvorrichtung, die in der zweiten Gruppe umfasst ist, verwendet wird, um ein Dienstpaket zu senden, wobei
das Verarbeitungsmodul dazu ausgelegt ist, einer Knotenvorrichtung, die durch die Verwaltungsvorrichtung verwaltet wird, eine Konkurrenzdauer zuzuteilen, wobei die Konkurrenzdauer von der Knotenvorrichtung, die durch die Verwaltungsvorrichtung verwaltet wird, verwendet wird, um durch Konkurrieren um einen Kanal ein Dienstpaket zu senden; und
ein Sendeempfängermodul (602, 702), das dazu ausgelegt ist, mindestens eine Benachrichtigungsnachricht zu senden, wobei die mindestens eine Benachrichtigungsnachricht verwendet wird, um mitzuteilen, dass die mindestens eine Knotenvorrichtung, die in der ersten Gruppe umfasst ist, der ersten Dauer der gemeinsamen Nutzung entspricht und die mindestens eine Knotenvorrichtung, die in der zweiten Gruppe umfasst ist, der zweiten Dauer der gemeinsamen Nutzung entspricht, und verwendet wird, um die Konkurrenzdauer durch die mindestens eine Knotenvorrichtung, die in der ersten Gruppe umfasst ist, und die mindestens eine Knotenvorrichtung, die in der zweiten Gruppe umfasst ist, zu bestimmen; und
wobei das Verarbeitungsmodul vor dem Zuteilen der ersten Dauer der gemeinsamen Nutzung für die erste Gruppe und dem Zuteilen der zweiten Dauer der gemeinsamen Nutzung für die zweite Gruppe ferner zu Folgendem ausgelegt ist:
Bestimmen einer Menge von Gruppen, wobei die Menge von Gruppen eine Menge von Gruppen ist, die erhalten wird, nachdem die Verwaltungsvorrichtung die Knotenvorrichtung, die durch die Verwaltungsvorrichtung verwaltet wird, gruppiert hat; und
Bestimmen einer Knotenvorrichtung, die jeder Gruppe in den erhaltenen Gruppen entspricht;
wobei das Verarbeitungsmodul speziell zu Folgendem ausgelegt ist:
Bestimmen der Menge von Gruppen basierend auf einer voreingestellten erforderlichen Latenzdauer und Übertragungsdauer des Dienstpakets.

12. System, das eine Verwaltungsvorrichtung (600, 700, 800) nach Anspruch 11 und einen ersten Knoten umfasst,
wobei der erste Knoten Folgendes umfasst:
ein Sendeempfängermodul (602, 702), das dazu ausgelegt ist, eine erste Benachrichtigungsnachricht, die durch die Verwaltungsvorrichtung gesendet wird, zu empfangen; und
ein Verarbeitungsmodul (601, 701), das zu Folgendem ausgelegt ist: Bestimmen einer Dauer der gemeinsamen Nutzung, die der ersten Knotenvorrichtung durch die Verwaltungsvorrichtung zugeteilt wird, und Bestimmen einer Konkurrenzdauer basierend auf der ersten Benachrichtigungsnachricht, wobei das Sendeempfängermodul zu Folgendem ausgelegt ist: Senden eines Dienstpakets innerhalb der Dauer der gemeinsamen Nutzung und Senden eines Dienstpakets innerhalb der Konkurrenzdauer durch Konkurrieren um einen Kanal.

## Revendications

1. Procédé d'attribution de temps, comprenant :
l'attribution (201), par un dispositif de gestion, d'une première durée de partage à un premier groupe, et l'attribution d'une seconde durée de partage à un second groupe, dans lequel le premier groupe comprend au moins un dispositif de nœud géré par le dispositif de gestion, et le second groupe comprend au moins un dispositif de nœud géré par le dispositif de gestion, la première durée de partage est utilisée par l'au moins un dispositif de nœud compris dans le premier groupe pour envoyer un paquet de service, et la seconde durée de partage est utilisée par l'au moins un dispositif de nœud compris dans le second groupe pour envoyer un paquet de service ;
l'attribution (202), par le dispositif de gestion, d'une durée de conflit à un dispositif de nœud géré par le dispositif de gestion, dans lequel la durée de conflit est utilisée par le dispositif de nœud géré par le dispositif de gestion pour envoyer un paquet de service en se disputant un canal ; et
l'envoi (203, 405), par le dispositif de gestion, d'au moins un premier message de notification, dans lequel l'au moins un premier message de notification est utilisé pour notifier que l'au moins un dispositif de nœud compris dans le premier groupe correspond à la première durée de partage et l'au moins un dispositif de nœud compris dans le second groupe correspond à la seconde durée de partage, et est utilisé pour déterminer la durée de conflit par l'au moins un dispositif de nœud compris dans le premier groupe et l'au moins un dispositif de nœud compris dans le second groupe ;
dans lequel avant l'attribution, par le dispositif de gestion, de la première durée de partage au premier groupe,
et l'attribution de la seconde durée de partage au second groupe, le procédé comprend en outre :
la détermination, par le dispositif de gestion, d'une quantité de groupes, dans lequel la quantité de groupes est une quantité de groupes obtenue après que le dispositif de gestion a regroupé le dispositif de nœud géré par le dispositif de gestion ; et
la détermination, par le dispositif de gestion, d'un dispositif de nœud correspondant à chaque groupe dans les groupes obtenus ; et
la détermination, par le dispositif de gestion, d'une quantité de groupes comprend :
la détermination (402), par le dispositif de gestion, de la quantité de groupes sur la base d'une durée de latence requise prédéfinie et d'une durée de transmission du paquet de service.

2. Procédé selon la revendication 1, dans lequel la détermination, par le dispositif de gestion, du dispositif de nœud correspondant à chaque groupe dans les groupes obtenus comprend :
la détermination (403), par le dispositif de gestion sur la base d'une quantité totale de dispositifs de nœud gérés par le dispositif de gestion, de la quantité de groupes et d'une première règle prédéfinie, d'une quantité de dispositifs de nœud correspondant à chaque groupe ; et
la détermination (404), par le dispositif de gestion sur la base de la quantité totale de dispositifs de nœud gérés par le dispositif de gestion, de la quantité de dispositifs de nœud correspondant à chaque groupe et d'une seconde règle prédéfinie, du dispositif de nœud correspondant à chaque groupe.

3. Procédé selon la revendication 2, dans lequel la première règle prédéfinie comprend :
la détermination, par le dispositif de gestion, que la quantité de dispositifs de nœud correspondant à chaque groupe est K, où K est supérieur ou égal à K1 et est inférieur ou égal à K2, K1 = n/(g - m), K2 = n/(g + m), n est la quantité totale de dispositifs de nœud gérés par le dispositif de gestion, g est la quantité de groupes et m est une valeur de plage flottante prédéfinie.

4. Procédé selon la revendication 2, dans lequel la seconde règle prédéfinie comprend :
la détermination (501), par le dispositif de gestion sur la base d'une relation de topologie physique du dispositif de nœud, d'un dispositif de nœud de niveau 1 dans le dispositif de nœud géré par le dispositif de gestion ;
le fait de déterminer (502), par le dispositif de gestion, si une quantité totale de dispositifs de nœud enfant dans une branche comprise dans le dispositif de nœud parent de niveau 1 est inférieure ou égale à K2, où K2 = n/(g + m), n est la quantité totale de dispositifs de nœud gérés par le dispositif de gestion, g est la quantité de groupes, et m est une valeur de plage flottante prédéfinie ; et
si oui, le classement (507), par le dispositif de gestion, du dispositif de nœud parent de niveau 1 et des dispositifs de nœud enfant dans la branche comprise dans le dispositif de nœud parent de niveau 1 dans un même groupe.

5. Procédé selon la revendication 4, dans lequel le dispositif de nœud parent de niveau 1 comprend un premier dispositif de nœud parent de niveau 1 et un second dispositif de nœud parent de niveau 1, et si une quantité totale de dispositifs de nœud enfant comprise dans une branche dans laquelle le second dispositif de nœud parent de niveau 1 est situé est supérieure à K2, et une quantité de dispositifs de nœud enfant dans une branche comprise dans le premier dispositif de nœud parent de niveau 1 est inférieure ou égale à K2, le procédé comprend en outre :
la détermination, par le dispositif de gestion, d'un dispositif de nœud enfant de niveau 2 compris dans le second dispositif de nœud parent de niveau 1 ;
la détermination, par le dispositif de gestion, qu'une quantité totale de dispositifs de nœud enfant dans une branche comprise dans chaque dispositif de nœud enfant de niveau 2 est inférieure ou égale à K2 ;
le fait de déterminer (504), par le dispositif de gestion, si une somme de la quantité totale de dispositifs de nœud enfant dans la branche comprise dans le dispositif de nœud enfant de niveau 2 et une quantité de dispositifs de nœud enfant dans la branche comprise dans le premier dispositif de nœud parent de niveau 1 est inférieure ou égale à K2 ; et
si oui, le classement (505), par le dispositif de gestion, des dispositifs de nœud enfant dans la branche comprise dans le dispositif de nœud enfant de niveau 2 et des dispositifs de nœud enfant dans la branche comprise dans le premier dispositif de nœud parent de niveau 1 dans un même groupe ; ou
si non, le classement (506), par le dispositif de gestion, du dispositif de nœud enfant de niveau 2 et des dispositifs de nœud enfant dans la branche comprise dans le dispositif de nœud enfant de niveau 2 dans un nouveau groupe.

6. Procédé selon l'une quelconque des revendications 1 à 5, dans lequel la durée de partage et la durée de conflit sont distribuées à des intervalles dans la durée de latence requise prédéfinie, un intervalle de temps entre la durée de partage et la durée de partage est t2, la durée de partage est t1, la durée de conflit est t2 - t1, T est la durée de latence requise prédéfinie, g est la quantité de groupes, et t1 est inférieure ou égale à la durée de transmission du paquet de service.

7. Procédé selon l'une quelconque des revendications 1 à 6, dans lequel le premier groupe comprend un premier dispositif de nœud et un second dispositif de nœud, et le procédé comprend en outre :
lorsque le premier dispositif de nœud et le second dispositif de nœud exécutent des services pendant la première durée de partage, la réception, par le dispositif de gestion, d'un premier paquet envoyé par le premier dispositif de nœud et d'un second paquet envoyé par le second dispositif de nœud ;
si le dispositif de gestion ne parvient pas à analyser (407) le premier paquet et le second paquet, et une puissance de réception à laquelle le dispositif de gestion reçoit un paquet pendant la première durée de partage est supérieure à un seuil prédéfini, l'attribution, par le dispositif de gestion, d'une première durée dédiée au premier dispositif de nœud, et l'attribution d'une seconde durée dédiée au second dispositif de nœud, dans lequel la première durée dédiée est utilisée par le premier dispositif de nœud pour envoyer le premier paquet, et la seconde durée dédiée est utilisée par le second dispositif de nœud pour envoyer le second paquet ; et
l'envoi (408), par le dispositif de gestion, d'au moins un second message de notification, dans lequel l'au moins un second message de notification est utilisé pour indiquer que le premier dispositif de nœud correspond à la première durée dédiée et que le second dispositif de nœud correspond à la seconde durée dédiée.

8. Procédé selon la revendication 1, dans lequel le procédé comprend :
la réception (405), par un premier dispositif de nœud, du premier message de notification envoyé par le dispositif de gestion ;
la détermination, par le premier dispositif de nœud sur la base du premier message de notification, d'une durée de partage attribuée par le dispositif de gestion au premier dispositif de nœud et la détermination d'une durée de conflit ; et
l'envoi (406, 409), par le premier dispositif de nœud, d'un paquet de service pendant la durée de partage, et l'envoi d'un paquet de service pendant la durée de conflit en se disputant un canal.

9. Procédé selon la revendication 8, dans lequel la durée de partage correspond au premier dispositif de nœud et à un second dispositif de nœud, et l'envoi (406, 409), par le premier dispositif de nœud, d'un paquet de service pendant la durée de partage comprend :
l'envoi (409), par le premier dispositif de nœud, du paquet de service pendant la durée de partage de manière à se disputer le canal avec le second dispositif de nœud.

10. Procédé selon la revendication 8 ou 9, dans lequel lorsque le dispositif de gestion ne parvient pas à analyser (407) le paquet de service, le procédé comprend en outre :
la réception (408), par le premier dispositif de nœud, d'un second message de notification envoyé par le dispositif de gestion ;
la détermination, par le premier dispositif de nœud sur la base du second message de notification, d'une durée dédiée attribuée par le dispositif de gestion au premier dispositif de nœud ; et
l'envoi (406, 409), par le premier dispositif de nœud, du paquet de service au dispositif de gestion à nouveau pendant la durée dédiée.

11. Dispositif de gestion (600, 700, 800), comprenant :
un module de traitement (601, 701, 801), configuré pour attribuer une première durée de partage à un premier groupe, et attribuer une seconde durée de partage à un second groupe, dans lequel le premier groupe comprend au moins un dispositif de nœud géré par le dispositif de gestion, et le second groupe comprend au moins un dispositif de nœud géré par le dispositif de gestion, la première durée de partage est utilisée par l'au moins un dispositif de nœud compris dans le premier groupe pour envoyer un paquet de service, et la seconde durée de partage est utilisée par l'au moins un dispositif de nœud compris dans le second groupe pour envoyer un paquet de service, dans lequel le module de traitement est configuré pour attribuer une durée de conflit à un dispositif de nœud géré par le dispositif de gestion, dans lequel la durée de conflit est utilisée par le dispositif de nœud géré par le dispositif de gestion pour envoyer un paquet de service en se disputant un canal ; et
un module émetteur-récepteur (602, 702), configuré pour envoyer au moins un premier message de notification, dans lequel l'au moins un premier message de notification est utilisé pour notifier que l'au moins un dispositif de nœud compris dans le premier groupe correspond à la première durée de partage et l'au moins un dispositif de nœud compris dans le second groupe correspond à la seconde durée de partage, et est utilisé pour déterminer la durée de conflit par l'au moins un dispositif de nœud compris dans le premier groupe et l'au moins un dispositif de nœud compris dans le second groupe ; et
dans lequel le module de traitement est en outre configuré pour, avant d'attribuer la première durée de partage au premier groupe et d'attribuer la seconde durée de partage au second groupe :
déterminer une quantité de groupes, dans lequel la quantité de groupes est une quantité de groupes obtenue après que le dispositif de gestion a regroupé le dispositif de nœud géré par le dispositif de gestion ; et
déterminer un dispositif de nœud correspondant à chaque groupe dans les groupes obtenus ;
dans lequel le module de traitement est spécifiquement configuré pour :
déterminer la quantité de groupes sur la base d'une durée de latence requise prédéfinie et d'une durée de transmission du paquet de service.

12. Système comprenant un dispositif de gestion (600, 700, 800) selon la revendication 11 et un premier nœud,
dans lequel le premier nœud comprend :
un module émetteur-récepteur (602, 702), configuré pour recevoir un premier message de notification envoyé par le dispositif de gestion ; et
un module de traitement (601, 701), configuré pour : déterminer, sur la base du premier message de notification, la durée de partage attribuée par le dispositif de gestion au premier dispositif de nœud et déterminer la durée de conflit, dans lequel le module émetteur-récepteur est configuré pour : envoyer un paquet de service pendant la durée de partage, et envoyer un paquet de service pendant la durée de conflit en se disputant un canal.
